(19) Europäisches Patentamt
European Patent Office
Office européen des brevets

(11) Veröffentlichungsnummer: **0 011 792**
**B1**

(12) # EUROPÄISCHE PATENTSCHRIFT

(45) Veröffentlichungstag der Patentschrift: **06.01.82**

(51) Int. Cl.³: **C 07 C 125/06**, C 07 C 155/02, A 01 N 47/12

(21) Anmeldenummer: **79104560.2**

(22) Anmeldetag: **19.11.79**

(54) **Phenoxyacylurethane, Verfahren zu ihrer Herstellung und ihre Verwendung als Pflanzenwachstumsregulatoren.**

(30) Priorität: **30.11.78 DE 2851766**

(43) Veröffentlichungstag der Anmeldung: **11.06.80 Patentblatt 80/12**

(45) Bekanntmachung des Hinweises auf die Patenterteilung: **06.01.82 Patentblatt 82/1**

(84) Benannte Vertragsstaaten: **CH DE FR GB IT**

(56) Entgegenhaltungen:
**BULLETIN OF THE CHEMICAL SOCIETY OF JAPAN; Band 40, Nr. 2, Februar 1967, Tokyo, JP, FUJISAWA et al.: »Nucleophilic reactions of Diethyl N-Phenyliminocarbonate«, Seiten 337—339**
**CHEMICAL ABSTRACTS, Band 66, Nr. 25, 19. Juni 1967, Zusammenfassung Nr. 115394m, Seite 10711, Columbus, Ohio, US,**
**K. A. NURIDZHANYAN et al.: »Synthesis of N-(aryloxyacetyl)carbamic and -thiocarbamic acid esters«**

(73) Patentinhaber: **BAYER AG, Zentralbereich Patente, Marken und Lizenzen, D-5090 Leverkusen 1, Bayerwerk (DE)**

(72) Erfinder: **Schlee, Hans Georg, Dr., Flora-Strasse 25, D-5090 Leverkusen 3 (DE)**
Erfinder: **Lürssen, Klaus, Dr., August-Kierspel-Strasse 89, D-5060 Bergisch-Gladbach 2 (DE)**

EP 0 011 792 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Phenoxyacylurethane, Verfahren zu ihrer Herstellung und ihre Verwendung als Pflanzenwachstumsregulatoren

Die vorliegende Erfindung betrifft neue Phenoxyacylurethane, ein Verfahren zu ihrer Herstellung sowie ihre Verwendung zur Regulierung des Pflanzenwachstums.

Es ist bereits bekanntgeworden, daß 2-Chlorethylphosphonsäure pflanzenwuchsregulierende Eigenschaften aufweist (vgl. DE-OS 2 050 245). Die Wirksamkeit dieses Stoffes ist jedoch — vor allem bei niedrigen Aufwandmengen — nicht immer ganz befriedigend.

Weiterhin ist bekanntgeworden, daß ein unter der Bezeichnung »Off-Shoot-T«® im Handel befindliches Produkt auf Basis von Fettalkoholen mit 6, 8, 10 und 12 Kohlenstoffatomen zur Regulierung des Pflanzenwachstums, insbesondere zur Unterdrückung des Seitentriebwachstums bei Tabak eingesetzt werden kann (vgl. Farm. Chem. Handbook 1975, Meister Publishing Co., Willoughby, Ohio, 1975, Pesticide Dictionary D 147). In manchen Fällen, vor allem bei niedrigen Aufwandmengen, läßt allerdings auch die Wirksamkeit dieses Produkts zu wünschen übrig.

Schließlich sind aus Chemical Abstracts 66, 115 394 m (1967), bestimmte N-Aryloxyacetyl-carbamidsäureester bzw. N-Aryloxyacetyl-carbamidsäure-thiolester bekannt, in denen das Stickstoffatom jeweils noch ein Wasserstoffatom trägt. Die Verbindungen besitzen herbizide Wirksamkeit. Hinweise auf eventuelle pflanzenwuchsregulierende Eigenschaften dieser Stoffe sind nicht vorhanden.

Es wurden nun neue Phenoxyacylurethane der Formel

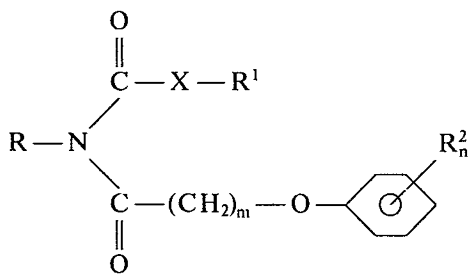

(I)

in welcher

R für Alkyl mit 1 bis 6 Kohlenstoffatomen, Halogenalkyl mit 1 bis 6 Kohlenstoffatomen und 1 bis 5 Halogenatomen, Cycloalkyl mit 5 bis 7 Kohlenstoffatomen oder für gegebenenfalls durch Halogen, Halogenalkyl mit 1 bis 3 Kohlenstoffatomen und 1 bis 5 Halogenatomen, Nitro und/oder Alkyl mit 1 bis 4 Kohlenstoffatomen substituiertes Phenyl steht,

$R^1$ für Alkyl mit 1 bis 6 Kohlenstoffatomen, Cycloalkyl mit 5 bis 7 Kohlenstoffatomen oder für Phenyl steht,

$R^2$ für Alkyl mit 1 bis 3 Kohlenstoffatomen, Fluor, Chlor oder Brom steht,

X für Sauerstoff oder Schwefel steht,

m für 1 oder 2 steht und

n für ganze Zahlen von 1 bis 3 steht,

gefunden.

Weiterhin wurde gefunden, daß man die Phenoxyacylurethane der Formel (I) enthält, wenn man Iminokohlensäure-Derivate der Formel

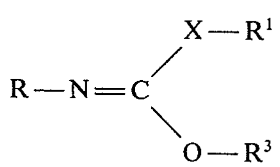

(II)

in welcher

R, $R^1$,und X die oben angegebene Bedeutung haben und

$R^3$ für Alkyl mit 1 bis 4 Kohlenstoffatomen steht,

mit Phenoxyacylhalogeniden der Formel

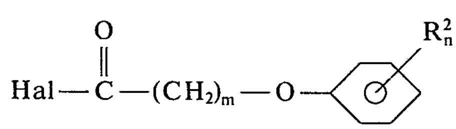

(III)

in welcher

R², m und n die oben angegebene Bedeutung haben und
Hal für Chlor oder Brom steht,

in Gegenwart eines Verdünnungsmittels umsetzt.

Außerdem wurde nun gefunden, daß die Phenoxyacylurethane der Formel (I) sich durch starke pflanzenwuchsregulierende Eigenschaften auszeichnen.

Überraschenderweise zeigen die erfindungsgemäßen Phenoxyacylurethane der Formel (I) eine wesentlich höhere pflanzenwuchsregulierende Wirksamkeit als die aus dem Stand der Technik bekannten Stoffe 2-Chlorethyl-phosphonsäure und Off-Shoot-T®, welches hochaktive Wirkstoffe gleicher Wirkungsart sind. Im übrigen konnten die sehr guten pflanzenwuchsregulierenden Eigenschaften der erfindungsgemäßen Phenoxyacylurethane auch im Hinblick auf die technische Lehre, die der Veröffentlichung in Chemical Abstracts 66, 115 394 m (1967), zu entnehmen ist, nicht erwartet werden, denn die vorbekannten Stoffe unterscheiden sich konstitutionell von den erfindungsgemäßen Verbindungen und sind außerdem nur als Herbizide bekannt.

Als Beispiele für erfindungsgemäße Phenoxyacylurethane seien im einzelnen aufgeführt:

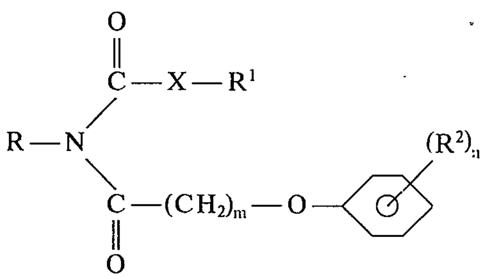

(I)

| R | $R^1$ | $R^2$ | X | m | n |
|---|---|---|---|---|---|
| $CH_3$ | $CH_3$ | 2,4 $Cl_2$ | S | 1 | 2 |
| $C_2H_5$ | $CH_3$ | 2,4 $Cl_2$ | S | 1 | 2 |
| n-$C_3H_7$ | $CH_3$ | 2,4 $Cl_2$ | S | 1 | 2 |
| i-$C_3H_7$ | $CH_3$ | 2,4 $Cl_2$ | O | 1 | 2 |
| n-$C_4H_9$ | $CH_3$ | 2,4 $Cl_2$ | O | 1 | 2 |
| $CF_3$ | $CH_3$ | 2,4 $Cl_2$ | O | 1 | 2 |
| $CFCl_2$ | $CH_3$ | 2,4 $Cl_2$ | S | 1 | 2 |
| $CF_2Cl$ | $CH_3$ | 2,4 $Cl_2$ | S | 1 | 2 |
| $CCl_3$ | $CH_3$ | 2,4 $Cl_2$ | S | 1 | 2 |
| $C_2H_4Cl$ | $CH_3$ | 2,4 $Cl_2$ | S | 1 | 2 |
| 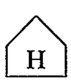 | $CH_3$ | 2,4 $Cl_2$ | S | 1 | 2 |
| 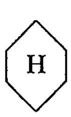 | $CH_3$ | 2,4 $Cl_2$ | S | 1 | 2 |
| 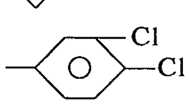 | $CH_3$ | 2,4 $Cl_2$ | O | 1 | 2 |

Fortsetzung

| R | $R^1$ | $R^2$ | X | m | n |
|---|---|---|---|---|---|
| 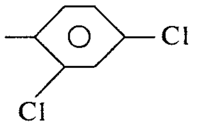 | $CH_3$ | 2,4 $Cl_2$ | O | 1 | 2 |
| 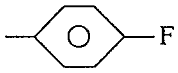 | $CH_3$ | 2,4 $Cl_2$ | O | 1 | 2 |
| 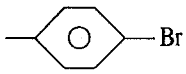 | $CH_3$ | 2,4 $Cl_2$ | O | 1 | 2 |
| 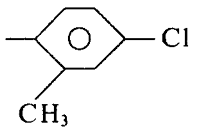 | $CH_3$ | 2,4 $Cl_2$ | S | 1 | 2 |
| 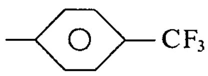 | $CH_3$ | 2,4 $Cl_2$ | S | 1 | 2 |
| 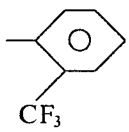 | $CH_3$ | 2,4 $Cl_2$ | S | 1 | 2 |
| 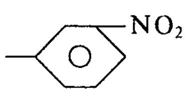 | $CH_3$ | 2,4 $Cl_2$ | S | 1 | 2 |
| 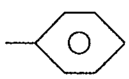 | $CH_3$ | 2,4 $Cl_2$ | S | 1 | 2 |
| 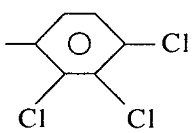 | $CH_3$ | 2,4 $Cl_2$ | S | 1 | 2 |
| 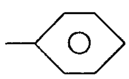 | $C_2H_5$ | 2,4 $Cl_2$ | S | 1 | 2 |
| 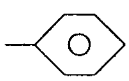 | n-$C_3H_7$ | 2,4 $Cl_2$ | S | 1 | 2 |
| 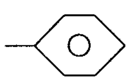 | i-$C_3H_7$ | 2,4 $Cl_2$ | S | 1 | 2 |
| 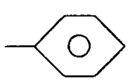 | n-$C_4H_9$ | 2,4 $Cl_2$ | O | 1 | 2 |
| 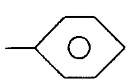 | i-$C_4H_9$ | 2,4 $Cl_2$ | O | 1 | 2 |
| 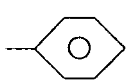 | sek.-$C_4H_9$ | 2,4 $Cl_2$ | O | 1 | 2 |
| 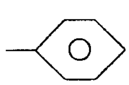 | tert.-$C_4H_9$ | 2,4 $Cl_2$ | O | 1 | 2 |

Fortsetzung

| R | $R^1$ | $R^2$ | X | m | n |
|---|---|---|---|---|---|
| 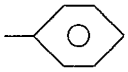 | 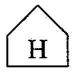 | 2,4 $Cl_2$ | O | 1 | 2 |
| 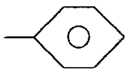 | 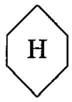 | 2,4 $Cl_2$ | O | 1 | 2 |
| 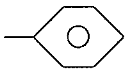 | 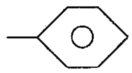 | 2,4 $Cl_2$ | O | 1 | 2 |
| 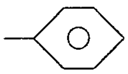 | $CH_3$ | 2 Cl | O | 1 | 1 |
| 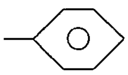 | $CH_3$ | 2 F | O | 1 | 1 |
| 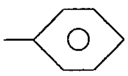 | $CH_3$ | 2 Br | O | 1 | 1 |
| 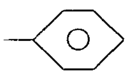 | $CH_3$ | 2 $CH_3$<br>4 Cl | O | 1 | 2 |
| 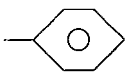 | $CH_3$ | 2,4,5 $Cl_3$ | O | 1 | 3 |
| 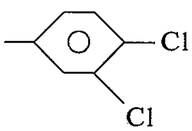 | n-$C_4H_9$ | 2,4,5 $Cl_3$ | S | 2 | 3 |
| $-C_4H_9$ | n-$C_3H_7$ | 2,4,5 $Cl_3$ | S | 2 | 3 |
| 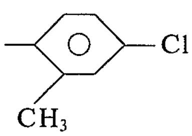 | $C_2H_5$ | 2,4 $Cl_2$ | O | 2 | 2 |
| 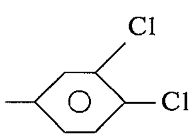 | $CH_3$ | 2,4 $Cl_2$ | O | 2 | 2 |
| 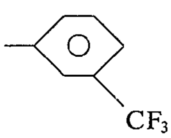 | $CH_3$ | 2,4 $Cl_2$ | O | 2 | 2 |
| 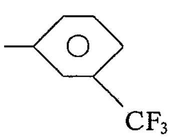 | $CH_3$ | 2,4,5 $Cl_3$ | O | 2 | 3 |

Fortsetzung

| R | $R^1$ | $R^2$ | X | m | n |
|---|---|---|---|---|---|
| 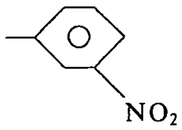 | $CH_3$ | 2,4 $Cl_2$ | O | 2 | 2 |
| 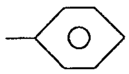 | n-$C_3H_7$ | 2,4,5 $Cl_3$ | S | 2 | 3 |

Verwendet man (3,4-Dichlorphenyl)-iminokohlensäure-dimethylester und (2,4-Dichlorphenoxy)-essigsäurechlorid als Ausgangsstoffe, so läßt sich der Ablauf des erfindungsgemäßen Verfahrens durch das nachfolgende Formelschema wiedergeben.

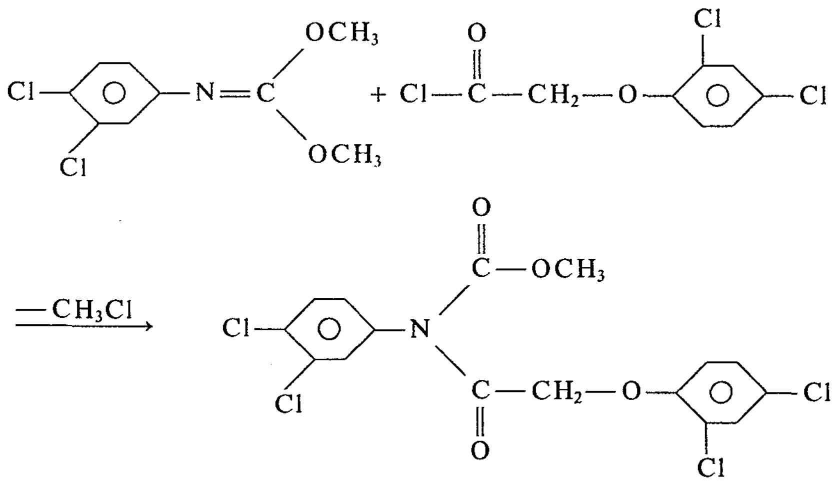


Die bei der Durchführung des erfindungsgemäßen Verfahrens als Ausgangsstoffe benötigten Iminokohlensäure-Derivate sind durch die Formel (II) allgemein definiert.

In dieser Formel haben R, $R^1$ und X diejenigen Bedeutungen, die bereits im Zusammenhang mit der Beschreibung der erfindungsgemäßen Phenoxyacylurethane der Formel (I) für diese Reste genannt wurden. $R^3$ steht vorzugsweise für Methyl oder Ethyl.

Als Beispiele für Imino-kohlensäure-Derivate der Formel (II) seien im einzelnen aufgeführt:

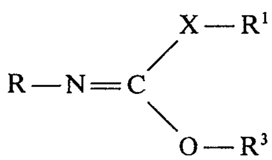

(II)

| R | $R^1$ | $R^3$ | X |
|---|---|---|---|
| $CH_3$ | $CH_3$ | $CH_3$ | S |
| $C_2H_5$ | $CH_3$ | $CH_3$ | S |
| n-$C_3H_7$ | $CH_3$ | $CH_3$ | S |
| i-$C_3H_7$ | $CH_3$ | $CH_3$ | O |
| n-$C_4H_9$ | $CH_3$ | $CH_3$ | O |
| $CF_3$ | $CH_3$ | $CH_3$ | O |

Fortsetzung

| R | $R^1$ | $R^3$ | X |
|---|---|---|---|
| $CFCl_2$ | $CH_3$ | $CH_3$ | S |
| $CF_2Cl$ | $CH_3$ | $CH_3$ | S |
| $CCl_3$ | $CH_3$ | $CH_3$ | S |
| $C_2H_4Cl$ | $CH_3$ | $CH_3$ | S |
| 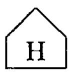 | $CH_3$ | $CH_3$ | S |
| 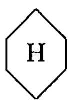 | $CH_3$ | $CH_3$ | S |
| 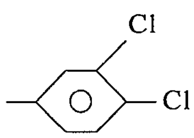 | $CH_3$ | $CH_3$ | O |
| 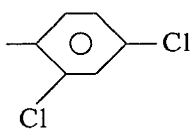 | $CH_3$ | $CH_3$ | O |
| 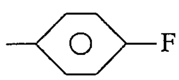 | $CH_3$ | $CH_3$ | O |
| 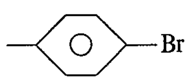 | $CH_3$ | $CH_3$ | O |
| 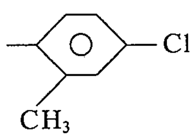 | $CH_3$ | $CH_3$ | S |
| 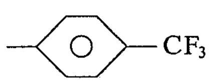 | $CH_3$ | $CH_3$ | S |
| 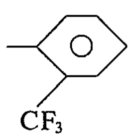 | $CH_3$ | $CH_3$ | S |
| 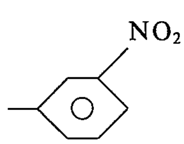 | $CH_3$ | $CH_3$ | S |
| 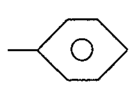 | $CH_3$ | $CH_3$ | S |

Fortsetzung

| R | $R^1$ | $R^3$ | X |
|---|---|---|---|
| 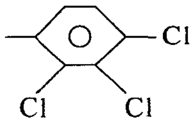 | $CH_3$ | $CH_3$ | S |
| 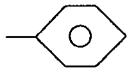 | $C_2H_5$ | $C_2H_5$ | S |
| 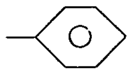 | n-$C_3H_7$ | $CH_3$ | S |
| 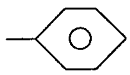 | i-$C_3H_7$ | $CH_3$ | S |
| 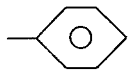 | n-$C_4H_9$ | $CH_3$ | O |
| 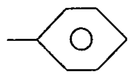 | i-$C_4H_9$ | $C_2H_5$ | O |
| 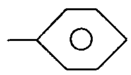 | sek.-$C_4H_9$ | $C_2H_5$ | O |
| 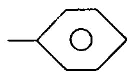 | tert.-$C_4H_9$ | $C_2H_5$ | O |
| 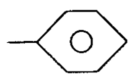 | 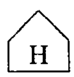 | $C_2H_5$ | O |
| 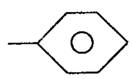 | 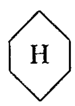 | $C_2H_5$ | O |
| 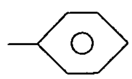 | 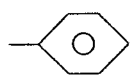 | $C_2H_5$ | O |
| 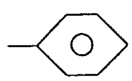 | $CH_3$ | $CH_3$ | O |

Die Iminokohlensäure-Derivate der Formel (II) sind zum großen Teil bekannt (vgl. DE-OS 2 257 344 und DE-OS 2 351 556). Die bisher noch nicht bekannten Iminokohlensäure-Derivate der Formel (II) lassen sich nach im Prinzip bekannten Verfahren in einfacher Weise herstellen.

So erhält man Iminokohlensäure-Derivate der Formel (II), indem man Isocyaniddichloride der Formel

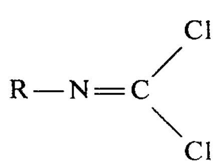

(IV)

in welcher

R die oben angegebene Bedeutung hat,

zunächst mit einem Alkohol oder einem Mercaptan der Formel

$$R^1—X—H \qquad (V)$$

in welcher
$R^1$ und X die oben angegebene Bedeutung haben,
und anschließend mit einem Alkohol der Formel

$$R^3OH \qquad (VI)$$

in welcher
$R^3$ die oben angegebene Bedeutung hat,
oder auch zunächst mit einem Alkohol der Formel (VI) und danach mit einem Alkohol bzw. einem Mercaptan der Formel (V), gegebenenfalls in Gegenwart eines Verdünnungsmittels wie Toluol, Xylol, bei Temperaturen zwischen 0° C und 100° C, vorzugsweise zwischen 0° C und 50° C, umsetzt.

Ferner lassen sich diejenigen Iminokohlensäure-Derivate der Formel (II), in denen X für Schwefel steht, dadurch herstellen, daß man Thionocarbamate der Formel

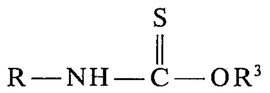
(VII)

in welcher
R und $R^3$ die oben angegebene Bedeutung haben,
mit Verbindungen der Formel

$$R^1Y \qquad (VIII)$$

in welcher

$R^1$ die oben angegebene Bedeutung hat und
Y für Chlor, Brom oder Sulfat steht,

in Gegenwart einer starken Base, wie z. B. Natriumhydroxid oder Kaliumhydroxid, sowie in Gegenwart eines Verdünnungsmittels, wie Xylol, Toluol oder eines niederen Alkohols, z. B. Methanol oder Ethanol, bei Temperaturen zwischen 0° C und 100° C, vorzugsweise zwischen 10° C und 50° C, umsetzt.

Die bei der Herstellung von Iminokohlensäure-Derivaten der Formel (II) als Ausgangsstoffe benötigten Verbindungen der Formeln (IV) bis (VIII) sind bekannt oder lassen sich nach im Prinzip bekannten Verfahren herstellen.

Die bei der Durchführung des erfindungsgemäßen Verfahrens weiterhin als Ausgangsstoffe benötigten Phenoxyacylhalogenide sind durch die Formel (III) allgemein definiert. In dieser Formel haben $R^2$, m und n diejenigen Bedeutungen, die bereits im Zusammenhang mit der Beschreibung der erfindungsgemäßen Phenoxyacylurethane für die Symbole genannt wurden. Hal steht für Chlor oder Brom.

Als Beispiele für Phenoxyacylhalogenide der Formel (III) seien im einzelnen aufgeführt:

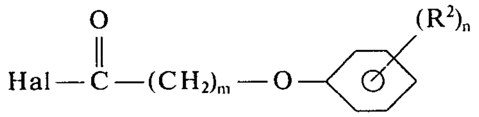

(III)

| Hal | $R^2$ | m | n |
|---|---|---|---|
| Cl | 2,4 $Cl_2$ | 1 | 2 |
| Br | 2,4 $Cl_2$ | 1 | 2 |
| Cl | 2,4 $Cl_2$ | 2 | 2 |
| Br | 2,4 $Cl_2$ | 2 | 2 |
| Cl | 2 Cl | 1 | 1 |
| Br | 2 Cl | 1 | 1 |
| Cl | 2 Cl | 2 | 1 |
| Br | 2 Cl | 2 | 1 |
| Cl | 2 F | 1 | 1 |
| Br | 2 F | 1 | 1 |
| Cl | 2 Br | 1 | 1 |
| Br | 2 Br | 1 | 1 |
| Cl | 2 $CH_3$, 4 Cl | 1 | 2 |
| Br | 2 $CH_3$, 4 Cl | 1 | 2 |
| Cl | 2,4,5 $Cl_3$ | 1 | 3 |

Die Phenoxyacylhalogenide der Formel (III) sind bekannt oder lassen sich nach im Prinzip bekannten Verfahren herstellen.

Das erfindungsgemäße Verfahren wird in Gegenwart geeigneter Verdünnungsmittel durchgeführt. Als solche kommen praktisch alle inerten organischen Solventien in Betracht. Hierzu gehören vorzugsweise aliphatische und aromatische, gegebenenfalls chlorierte Kohlenwasserstoffe, wie Benzin, Benzol, Toluol, Xylol, Methylenchlorid, Chloroform, Tetrachlorkohlenstoff, Chlorbenzol und o-Dichlorbenzol.

Die Reaktionstemperaturen können bei dem erfindungsgemäßen Verfahren innerhalb eines größeren Bereiches variiert werden. Im allgemeinen arbeitet man bei Temperaturen zwischen 20° C und 180° C, vorzugsweise zwischen 40° C und 120° C.

Bei der Durchführung des erfindungsgemäßen Verfahrens setzt man auf 1 Mol Iminokohlensäure-Derivat der Formel (II) 1 bis 1,1 Mol an Phenoxyacylhalogenid der Formel (III) ein. Die Aufarbeitung erfolgt nach üblichen Methoden. Im allgemeinen geht man so vor, daß man nach beendeter Umsetzung den kristallin anfallenden Wirkstoff abfiltriert und umkristallisiert. Es ist jedoch auch möglich, zunächst das Lösungsmittel abzuziehen und den verbleibenden Rückstand dann umzukristallisieren.

Die erfindungsgemäß verwendbaren Wirkstoffe greifen in den Metabolismus der Pflanzen ein und können deshalb als Wachstumsregulatoren eingesetzt werden.

Für die Wirkungsweise von Pflanzenwachstumsregulatoren gilt nach der bisherigen Erfahrung, daß ein Wirkstoff auch mehrere verschiedenartige Wirkungen auf Pflanzen ausüben kann. Die Wirkungen der Stoffe hängen im wesentlichen ab von dem Zeitpunkt der Anwendung, bezogen auf das Entwicklungsstadium der Pflanze, sowie von den auf die Pflanzen oder ihre Umgebung ausgebrachten Wirkstoffmengen und von der Art der Applikation. In jedem Fall sollen Wachstumsregulatoren die

Kulturpflanzen in bestimmter gewünschter Weise beeinflussen.

Pflanzenwuchsregulierende Stoffe können zum Beispiel zur Hemmung des vegetativen Wachstums der Pflanzen eingesetzt werden. Eine derartige Wuchshemmung ist unter anderem bei Gräsern von wirtschaftlichem Interesse, denn dadurch kann die Häufigkeit der Grasschnitte in Ziergärten, Park- und Sportanlagen, an Straßenrändern, auf Flughäfen oder in Obstanlagen reduziert werden. Von Bedeutung ist auch die Hemmung des Wuchses von krautigen und holzigen Pflanzen an Straßenrändern und in der Nähe von Pipelines oder Überlandleitungen oder ganz allgemein in Bereichen, in denen ein starker Zuwachs der Pflanzen unerwünscht ist.

Wichtig ist auch die Anwendung von Wachstumsregulatoren zur Hemmung des Längenwachstums von Getreide. Hierdurch wird die Gefahr des Umknickens (»Lagerns«) der Pflanzen vor der Ernte verringert oder vollkommen beseitigt. Außerdem können Wachstumsregulatoren bei Getreide eine Halmverstärkung hervorrufen, die ebenfalls dem Lagern entgegenwirkt. Die Anwendung von Wachstumsregulatoren zur Halmverkürzung und Halmverstärkung erlaubt es, höhere Düngermengen auszubringen, um den Ertrag zu steigern, ohne daß die Gefahr besteht, daß das Getreide lagert.

Eine Hemmung des vegetativen Wachstums ermöglicht bei vielen Kulturpflanzen eine dichtere Anpflanzung, so daß Mehrerträge, bezogen auf die Bodenfläche, erzielt werden können. Ein Vorteil der so erzielten kleineren Pflanzen ist auch, daß die Kultur leichter bearbeitet und beerntet werden kann.

Eine Hemmung des vegetativen Wachstums der Pflanzen kann auch dadurch zu Ertragssteigerungen führen, daß die Nährstoffe und Assimilate in stärkerem Maße der Blüten- und Fruchtbildung zugute kommen als den vegetativen Pflanzenteilen.

Mit Wachstumsregulatoren läßt sich häufig auch eine Förderung des vegetativen Wachstums erzielen. Dies ist von großem Nutzen, wenn die vegetativen Pflanzenteile geerntet werden. Eine Förderung des vegetativen Wachstums kann aber auch gleichzeitig zu einer Förderung des generativen Wachstums führen, dadurch, daß mehr Assimilate gebildet werden, so daß mehr oder größere Früchte entstehen.

Ertragssteigerungen können in manchen Fällen durch einen Eingriff in den pflanzlichen Stoffwechsel erreicht werden, ohne daß sich Änderungen des vegetativen Wachstums bemerkbar machen. Ferner kann mit Wachstumsregulatoren eine Veränderung der Zusammensetzung der Pflanzen erreicht werden, was wiederum zu einer Qualitätsverbesserung der Ernteprodukte führen kann. So ist es beispielsweise möglich, den Gehalt an Zucker in Zuckerrüben, Zuckerrohr, Ananas sowie in Zitrusfrüchten zu erhöhen oder den Proteingehalt in Soja oder Getreide zu steigern. Auch ist es beispielsweise möglich, den Abbau erwünschter Inhaltsstoffe, wie z. B. Zucker in Zuckerrüben oder Zuckerrohr, mit Wachstumsregulatoren vor oder nach der Ernte zu hemmen. Außerdem läßt sich die Produktion oder der Abfluß von sekundären Pflanzeninhaltsstoffen positiv beeinflussen. Als Beispiel sei die Stimulierung des Latexflusses bei Gummibäumen genannt.

Unter dem Einfluß von Wachstumsregulatoren kann es zur Ausbildung parthenokarper Früchte kommen. Ferner kann das Geschlecht der Blüten beeinflußt werden. Auch kann eine Sterilität des Pollens erzeugt werden, was bei der Züchtung und Herstellung von Hybridsaatgut eine große Bedeutung hat.

Durch den Einsatz von Wachstumsregulatoren läßt sich die Verzweigung der Pflanzen steuern. Einerseits kann durch Brechen der Apikaldominanz die Entwicklung von Seitentrieben gefördert werden, was besonders im Zierpflanzenbau auch in Verbindung mit einer Wuchshemmung sehr erwünscht sein kann. Andererseits ist es aber auch möglich, das Wachstum der Seitentriebe zu hemmen. Für diese Wirkung besteht z. B. großes Interesse im Tabakanbau oder bei der Anpflanzung von Tomaten.

Unter dem Einfluß von Wachstumsregulatoren kann der Blattbestand der Pflanzen so gesteuert werden, daß ein Entblättern der Pflanzen zu einem gewünschten Zeitpunkt erreicht wird. Eine derartige Entlaubung spielt bei der mechanischen Beerntung der Baumwolle eine große Rolle, ist aber auch in anderen Kulturen, wie z. B. im Weinbau, zur Erleichterung der Ernte von Interesse. Eine Entlaubung der Pflanzen kann auch vorgenommen werden, um die Transpiration der Pflanzen vor dem Verpflanzen herabzusetzen.

Ebenso läßt sich mit Wachstumsregulatoren der Fruchtfall steuern. Einerseits kann ein vorzeitiger Fruchtfall verhindert werden. Andererseits kann aber auch der Fruchtfall oder sogar das Abfallen der Blüten bis zu einem gewünschten Maße gefördert werden (»Ausdünnung«), um die Alternanz zu brechen. Unter Alternanz versteht man die Eigenart einiger Obstarten, endogen bedingt von Jahr zu Jahr sehr unterschiedliche Erträge zu bringen. Schließlich ist es möglich, mit Wachstumsregulatoren zum Zeitpunkt der Ernte die zum Ablösen der Früchte erforderlichen Kräfte zu reduzieren, um eine mechanische Beerntung zu ermöglichen oder eine manuelle Beerntung zu erleichtern.

Mit Wachstumsregulatoren läßt sich ferner eine Beschleunigung oder auch Verzögerung der Reife des Erntegutes vor oder nach der Ernte erreichen. Dieses ist von besonderem Vorteil, weil sich dadurch eine optimale Anpassung an die Bedürfnisse des Marktes herbeiführen läßt. Weiterhin können Wachstumsregulatoren in manchen Fällen die Fruchtausfärbung verbessern. Darüber hinaus kann mit Wachstumsregulatoren auch eine zeitliche Konzentrierung der Reife erzielt werden. Damit werden die Voraussetzungen dafür geschaffen, daß z. B. bei Tabak, Tomaten oder Kaffee eine

vollständige mechanische oder manuelle Beerntung in einem Arbeitsgang vorgenommen werden kann.

Durch Anwendung von Wachstumsregulatoren kann ferner die Samen- oder Knospenruhe der Pflanzen beeinflußt werden, so daß die Pflanzen, wie z. B. Ananas oder Zierpflanzen in Gärtnereien, zu einem Zeitpunkt keimen, austreiben oder blühen, an dem sie normalerweise hierzu keine Bereitschaft zeigen. Eine Verzögerung des Austriebes von Knospen oder der Keimung von Samen mit Hilfe von Wachstumsregulatoren kann in frostgefährdeten Gebieten erwünscht sein, um Schädigungen durch Spätfröste zu vermeiden.

Schließlich kann mit Wachstumsregulatoren eine Resistenz der Pflanzen gegen Frost, Trockenheit oder hohen Salzgehalt des Bodens induziert werden. Hierdurch wird die Kultivierung von Pflanzen in Gebieten möglich, die hierzu normalerweise ungeeignet sind.

Die erfindungsgemäßen Phenoxyacylurethane der Formel (I) zeichnen sich nicht nur durch sehr gute pflanzenwachstumsregulierende Eigenschaften aus, sondern besitzen auch eine herbizide Wirksamkeit.

Die Wirkstoffe können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldurck gasförmig sind, z. B. Aerosol-Treibgas, wie Halogenkohlenwasserstoffe sowie Butan, Propan, Stickstoff und Kohlendioxid. Als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material, wie Sägemehl, Kokosnußschalen, Maiskolben und Tabakstengel. Als Emulgier- und/oder schaumerzeugende Mittel kommen in Frage: z. B. nichtionogene und anionische Emulgatoren, wie Polyoxyethylen-Fettsäureester, Polyoxyethylen-Fettalkoholether, z. B. Alkylarylpolyglycol-ether, Alkylsulfonate, Alkylsulfate, Arylsulfonate sowie Eiweißhydrolysate. Als Dispergiermittel kommen in Frage: z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azol-Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemäßen Wirkstoffe können in den Formulierungen in Mischung mit anderen bekannten Wirkstoffen vorliegen, wie Fungizide, Insektizide, Akarizide und Herbizide, sowie in Mischungen mit Düngemitteln und anderen Wachstumsregulatoren.

Die Wirkstoffe können als solche, in Form ihrer Formulierungen oder der daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z. B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Die Aufwandmengen können in einem größeren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, daß die Anwendung der Wachstumsregulatoren in einem bevorzugten Zeitraum vorgenommen wird, dessen genaue Abgrenzung sich nach dem klimatischen und

vegetativen Gegebenheiten richtet.

Im folgenden wird die Aktivität der erfindungsgemäßen Phenoxyacylurethane der Formel (I) als Pflanzenwachstumsregulatoren durch einige Beispiele illustriert.

In den Beispielen werden die nachstehend aufgeführten Stoffe als Vergleichssubstanzen eingesetzt.

(A) = Off-Shoot-T®
(Wachstumsregulator auf Basis von Fettalkoholen mit 6, 8, 10 und 12 Kohlenstoffatomen)

(B) = 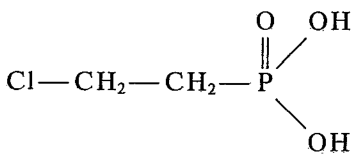

(2-Chlorethyl-phosphonsäure)

Beispiel A

Entlaubung und Austrocknung der Blätter bei Baumwolle

Lösungsmittel: 30 Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Baumwollpflanzen werden im Gewächshaus bis zur vollen Entfaltung des 5. Folgeblattes angezogen. In diesem Stadium werden die Pflanzen tropfnaß mit den Wirkstoffzubereitungen besprüht. Nach 1 Woche werden der Blattfall und das Austrocknen der Blätter im Vergleich zu den Kontrollpflanzen bonitiert. Es bedeuten:

0 kein Austrocknen der Blätter, kein Blattfall
\+ leichtes Austrocknen der Blätter, geringer Blattfall
++ starkes Austrocknen der Blätter, starker Blattfall
+++ sehr starkes Austrocknen der Blätter, sehr starker Blattfall

Die erfindungsgemäßen Wirkstoffe (1), (8), (11), (12) und (13) bewirken in diesem Test ein sehr starkes Austrocknen der Blätter sowie einen sehr starken Blattfall und außerdem eine Wiederaustriebshemmung.

Beispiel B

Hemmung des Seitentriebwachstums bei Tabak

Lösungsmittel: 30 Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Tabakpflanzen werden im Gewächshaus bis zur Entfaltung des 7. Folgeblattes angezogen. In diesem Stadium wird die apikale Vegetationsspitze entfernt, und die Pflanzen werden tropfnaß mit den Wirkstoffzubereitungen besprüht. Nach 3 Wochen werden die Seitentriebe der Pflanzen herausgebrochen und gewogen. Das Gewicht der Seitentriebe der behandelten Pflanzen wird mit dem der Kontrollpflanzen verglichen. 100% Hemmung bedeuten das Fehlen von Seitentrieben und 0% ein Wachstum der Seitentriebe entsprechend dem der Kontrollpflanzen.

Es zeigt sich, daß die erfindungsgemäßen Wirkstoffe (1), (6) und (11) das Seitentriebwachstum bei Tabak wesentlich stärker hemmen als die Vergleichssubstanz (A).

Beispiel C

Wuchshemmung bei Weizen

| | | |
|---|---|---|
| Lösungsmittel: | 30 Gewichtsteile | Dimethylformamid |
| Emulgator: | 1 Gewichtsteil | Polyoxyethylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Weizenpflanzen werden im Gewächshaus bis zum 2-Blatt-Stadium angezogen. In diesem Stadium werden die Pflanzen tropfnaß mit den Wirkstoffzubereitungen besprüht. Nach 3 Wochen wird bei allen Pflanzen der Zuwachs gemessen und die Wuchshemmung in % des Zuwachses der Kontrollpflanzen berechnet. Es bedeuten 100% den Stillstand des Wachstums und 0% ein Wachstum entsprechend dem der Kontrollpflanzen.

Es zeigt sich, daß die erfindungsgemäßen Wirkstoffe (5) und (6) bei Weizen eine wesentlich stärkere Wuchshemmung hervorrufen als die Vergleichssubstanz (B).

Beispiel D

Wuchshemmung bei Gerste

| | | |
|---|---|---|
| Lösungsmittel: | 30 Gewichtsteile | Dimethylformamid |
| Emulgator: | 1 Gewichtsteil | Polyoxyethylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Gerstepflanzen werden im Gewächshaus bis zum 2-Blatt-Stadium angezogen. In diesem Stadium werden die Pflanzen tropfnaß mit den Wirkstoffzubereitungen besprüht. Nach 3 Wochen wird bei allen Pflanzen der Zuwachs gemessen und die Wuchshemmung in Prozent des Zuwachses der Kontrollpflanzen berechnet. Es bedeuten 100% Wuchshemmung den Stillstand des Wachstums und 0% ein Wachstum entsprechend dem der Kontrollpflanzen.

Es zeigt sich, daß die erfindungsgemäßen Wirkstoffe (2), (3), (6) und (11) bei Ferste eine wesentlich stärkere Wuchshemmung hervorrufen als die Vergleichssubstanz (B).

Beispiel E

Wuchshemmung bei Sojabohnen

| | | |
|---|---|---|
| Lösungsmittel: | 30 Gewichtsteile | Dimethylformamid |
| Emulgator: | 1 Gewichtsteil | Polyoxyethylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Sojabohnenpflanzen werden im Gewächshaus bis zur vollen Entfaltung des ersten Folgeblattes angezogen. In diesem Stadium werden die Pflanzen tropfnaß mit den Wirkstoffzubereitungen besprüht. Nach 3 Wochen wird bei allen Pflanzen der Zuwachs gemessen und die Wuchshemmung in Prozent des Zuwachses der Kontrollpflanzen berechnet. Es bedeuten 100% Wuchshemmung den Stillstand des Wachstums und 0% ein Wachstum entsprechend dem der Kontrollpflanzen.

Es zeigt sich, daß die erfindungsgemäßen Wirkstoffe (1), (4), (7), (8), (9), (10), (11), (13) und (15) bei Sojabohnen eine wesentlich stärkere Wuchshemmung hervorrufen als die Vergleichssubstanz (B).

Beispiel F

Wuchshemmung bei Baumwolle

| | | |
|---|---|---|
| Lösungsmittel: | 30 Gewichtsteile | Dimethylformamid |
| Emulgator: | 1 Gewichtsteil | Polyoxyethylen-Sorbitan-Monolaurat |

Zur Herstellung einer zweckmäßigen Wirkstoffzubereitung vermischt man 1 Gewichtsteil Wirkstoff

mit den angegebenen Mengen Lösungsmittel und Emulgator und füllt mit Wasser auf die gewünschte Konzentration auf.

Baumwollpflanzen werden im Gewächshaus bis zur vollen Entfaltung des 5. Folgeblattes angezogen. In diesem Stadium werden die Pflanzen tropfnaß mit den Wirkstoffzubereitungen besprüht. Nach 3 Wochen wird der Zuwachs der Pflanzen gemessen und die Wuchshemmung in Prozent des Zuwachses der Kontrollpflanzen berechnet. Es bedeuten 100% Wuchshemmung den Stillstand des Wachstums und 0% ein Wachstum entsprechend dem der Kontrollpflanzen.

Es zeigt sich, daß die erfindungsgemäßen Wirkstoffe (7), (9) und (14) bei Baumwolle eine sehr starke Wuchshemmung hervorrufen.

## Beispiel G

### Wuchshemmung bei Gehölzen (Acer pseudoplatanus)

Lösungsmittel: 30 Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Einjährige Sämlinge mit einer Wuchshöhe von 25 cm werden mit den Wirkstoffzubereitungen tropfnaß besprüht. Nach 6 Wochen Wachstum im Gewächshaus wird der Zuwachs gemessen und die Wuchshemmung in Prozent des Zuwachses der Kontrollpflanzen berechnet. 100% Wuchshemmung bedeuten den Stillstand des Wachstums und 0% ein Wachstum entsprechend dem der Kontrollpflanzen.

Es zeigt sich, daß die erfindungsgemäßen Wirkstoffe (1), (6), (11) und (12) bei Acer pseudoplatanus eine sehr starke Wuchshemmung hervorrufen.

## Herstellungsbeispiele

### Beispiel 1

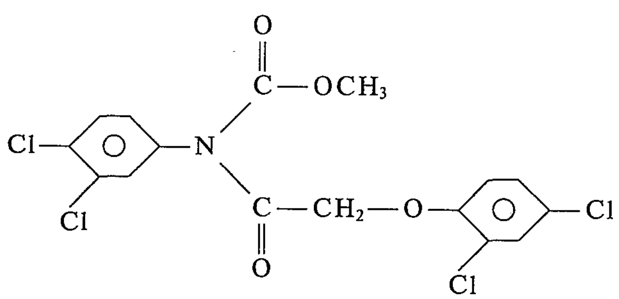

a) In eine Lösung von 23,4 g (0,1 Mol) N-(3,4-Dichlorphenyl)-iminokohlensäure-dimethylester in 100 ml Tetrachlorkohlenstoff wird bei 80°C unter Rühren eine Lösung von 24,0 g (0,1 Mol) 2,4-Dichlorphenoxyacetylchlorid in 50 ml Tetrachlorkohlenstoff eingetropft. Das Reaktionsgemisch wird weitere 8 Stunden unter Rückfluß gekocht, wobei Methylchlorid abgespalten wird. Beim Abkühlen entsteht ein Niederschlag. Man saugt ab und kristallisiert den Feststoff aus Waschbenzin um.
Ausbeute: 17 g
Fp.: 160–167°C.
Durch Eindampfen der Mutterlauge wird die Ausbeute verbessert.
Gesamtausbeute: 34 g (80% der Theorie).

b) Herstellung des Ausgangsproduktes

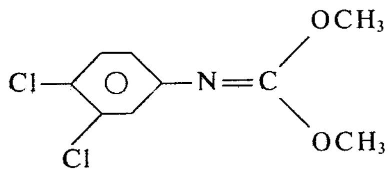

(II-1)

In eine Lösung von 16,0 g (0,4 Mol) Natriumhydroxid in 250 ml Methanol werden bei Raumtemperatur unter Rühren 48,6 g (0,2 Mol) 3,4-Dichlorphenyl-isocyaniddichlorid eingetropft, wobei sich das Reaktionsgemisch deutlich erwärmt. Man rührt 3 Stunden nach, läßt abkühlen und saugt ausgefallenes Kochsalz ab. Das Filtrat wird unter vermindertem Druck eingedampft. Man erhält auf diese Weise 43 g (92% der Theorie) an N-(3,4-Dichlorphenyl)-iminokohlensäure-dimethylester in Form eines gelben Öles.
Die Substanz wird durch ihr Kernresonanzspektrum und ihr IR-Spektrum charakterisiert.

Beispiel 2

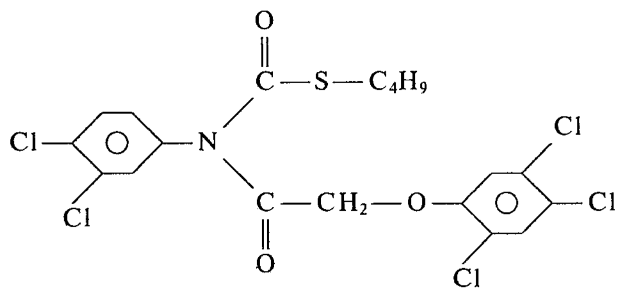

a) In eine Lösung von 30,6 g (0,1 Mol) N-(3,4-Dichlorphenyl)-imino-thio-kohlensäure-S-n-butyl-O-ethyl-ester in 100 ml Tetrachlorkohlenstoff wird bei 80° C unter Rühren in eine Lösung von 27,4 g (0,1 Mol) 2,4,5-Trichlorphenoxy-acetylchlorid in 50 ml Tetrachlorkohlenstoff eingetropft. Das Reaktionsgemisch wird weitere 5 Stunden unter Rückfluß gekocht. Nach dem Abkühlen saugt man den angefallenen Niederschlag ab und kristallisiert aus Waschbenzin um.
Ausbeute: 26 g (50% der Theorie).
Fp.: 132 – 134° C.

b) Herstellung des Ausgangsproduktes

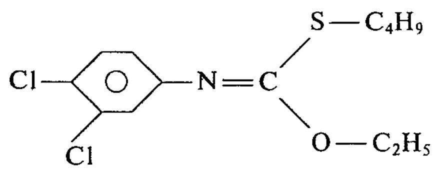

(II-2)

In eine Lösung von 20 g (0,5 Mol) Natriumhydroxid in 500 ml Ethanol werden bei Raumtemperatur unter Rühren 125 g (0,5 Mol) N-(3,4-Dichlorphenyl)-thiocarbamidsäureethylester gegeben. Anschließend werden 70 g (0,5 Mol) n-Butylbromid zugetropft, wobei sich das Reaktionsgemisch leicht erwärmt. Man rührt 8 Stunden nach und engt dann unter vermindertem Druck ein. Der pastöse Rückstand wird in Methylenchlorid aufgenommen und zur Entfernung von noch vorhandenen Salzen mit Wasser gewaschen. Die organische Phase wird abgetrennt, getrocknet und unter vermindertem Druck eingedampft. Man erhält auf diese Weise 130 g (85% der Theorie) an N-(3,4-Dichlorphenyl)-imino-thiokohlensäure-S-n-butyl-O-ethylester in Form eines gelben Öles.
Die Substanz wird durch ihr Kernresonanzspektrum und ihr IR-Spektrum charakterisiert.

Nach der in den Beispielen 1 und 2 beschriebenen Methode werden auch die in der nachstehenden Tabelle 1 formelmäßig aufgeführten Phenoxyacylurethane erhalten.

Tabelle 1

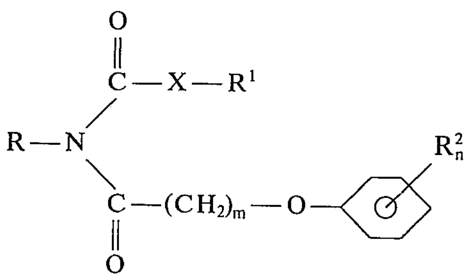

(I)

| Beispiel-Nr. | R | $R^1$ | $R^2$ | X | m | n | Schmelzpunkt [°C] |
|---|---|---|---|---|---|---|---|
| 3 | n-$C_4H_9$ | n-$C_3H_7$ | 2,4,5 $Cl_3$ | S | 1 | 3 | 87 – 88 |
| 4 | 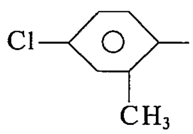 | $C_2H_5$ | 2,4 $Cl_2$ | O | 1 | 2 | 161 – 162 |
| 5 | 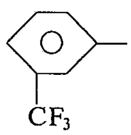 | $CH_3$ | 2,4 $Cl_2$ | O | 1 | 2 | 108 – 109 |
| 6 | 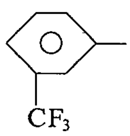 | $CH_3$ | 2,4,5 $Cl_3$ | O | 1 | 3 | 125 – 127 |
| 7 | 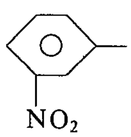 | $CH_3$ | 2,4 $Cl_2$ | O | 1 | 2 | 163 – 165 |
| 8 | 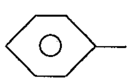 | n-$C_3H_7$ | 2,4,5 $Cl_3$ | S | 1 | 3 | 144 – 145 |
| 9 | 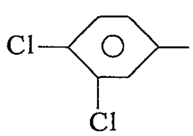 | n-$C_3H_7$ | 2,4 $Cl_2$ | S | 1 | 2 | 142 – 144 |
| 10 | 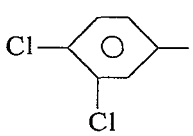 | n-$C_3H_7$ | 2,4,5 $Cl_3$ | S | 1 | 2 | 172 – 173 |
| 11 | n-$C_3H_7$ | $CH_3$ | 2,4,5 $Cl_3$ | S | 1 | 3 | 112 – 114 |
| 12 | $(CH_3)_2-CH-CH_2$ | $CH_3$ | 2,4 $Cl_2$ | S | 1 | 2 | 90 – 92 |
| 13 | $(CH_3)_2-CH-CH_2$ | $CH_3$ | 2,4,5 $Cl_3$ | S | 1 | 3 | 121 – 123 |

Fortsetzung

| Beispiel-Nr. | R | $R^1$ | $R^2$ | X | m | n | Schmelzpunkt [°C] |
|---|---|---|---|---|---|---|---|
| 14 | 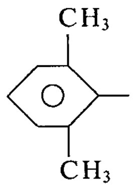 | $CH_3$ | 2,4 $Cl_2$ | S | 1 | 2 | 102 – 103 |
| 15 | n-$C_4H_9$ | $CH_3$ | 2,4 $Cl_2$ | S | 1 | 2 | 56 – 57 |
| 16 | 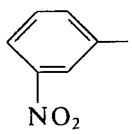 | $CH_3$ | 2,4,5 $Cl_3$ | O | 1 | 3 | 176 – 178 |

Nach den in den Beispielen 1 und 2 beschriebenen Methoden werden auch die in der nachfolgenden Tabelle 2 formelmäßig aufgeführten Iminokohlensäure-Derivate erhalten.

Tabelle 2

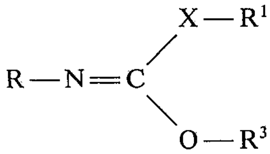

(II)

| Beispiel-Nr. | R | $R^1$ | $R^3$ | X | Ausbeute [%] | Phys. Konstante |
|---|---|---|---|---|---|---|
| II-3 | $n\text{-}C_4H_9$ | $n\text{-}C_3H_7$ | $C_2H_5$ | S | 77 | Öl |
| II-4 | 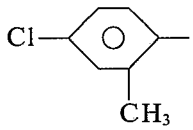 | $C_2H_5$ | $C_2H_5$ | O | | |
| II-5 | 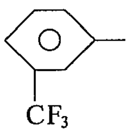 | $CH_3$ | $C_2H_5$ | O | | |
| II-6 | 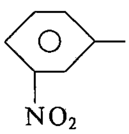 | $CH_3$ | $CH_3$ | O | | |
| II-7 | 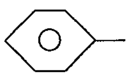 | $n\text{-}C_3H_7$ | $C_2H_5$ | S | 90 | $Kp._{0,1}$: 95 – 96°C |
| II-8 | $n\text{-}C_3H_7$ | $CH_3$ | $C_2H_5$ | S | 66 | $Kp._{14}$: 72 – 74°C |
| II-9 | 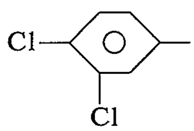 | $n\text{-}C_3H_7$ | $C_2H_5$ | S | 94 | Öl |
| II-10 | $(CH_3)_2—CH—CH_2$ | $CH_3$ | $C_2H_5$ | S | 79 | Öl |
| II-11 | 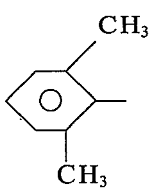 | $CH_3$ | $C_2H_5$ | S | 94 | Öl |
| II-12 | $n\text{-}C_4H_9$ | $CH_3$ | $C_2H_5$ | S | 77 | $Kp._{14}$: 92 – 93°C |

**Patentansprüche**

1. Phenoxyacylurethane der Formel

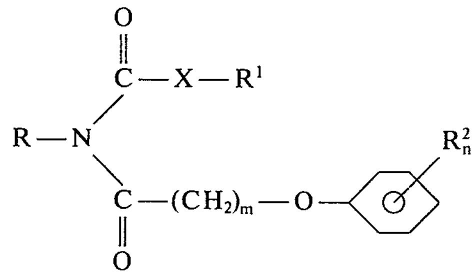

(I)

in welcher

R für Alkyl mit 1 bis 6 Kohlenstoffatomen, Halogenalkyl mit 1 bis 6 Kohlenstoffatomen und 1 bis 5 Halogenatomen, Cycloalkyl mit 5 bis 7 Kohlenstoffatomen oder für gegebenenfalls durch Halogen, Halogenalkyl mit 1 bis 3 Kohlenstoffatomen und 1 bis 5 Halogenatomen, Nitro und/oder Alkyl mit 1 bis 4 Kohlenstoffatomen substituiertes Phenyl steht,
$R^1$ für Alkyl mit 1 bis 6 Kohlenstoffatomen, Cycloalkyl mit 5 bis 7 Kohlenstoffatomen oder für Phenyl steht,
$R^2$ für Alkyl mit 1 bis 3 Kohlenstoffatomen, Fluor, Chlor oder Brom steht,
X für Sauerstoff oder Schwefel steht,
m für 1 oder 2 steht und
n für ganze Zahlen von 1 bis 3 steht.

2. Verfahren zur Herstellung von Phenoxyacylurethanen der Formel (I), dadurch gekennzeichnet, daß man Iminokohlensäure-Derivate der Formel

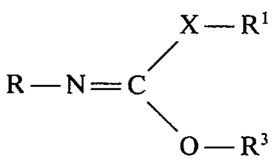

(II)

in welcher

R, $R^1$ und X die oben angegebene Bedeutung haben,
$R^3$ für Alkyl mit 1 bis 4 Kohlenstoffatomen steht,

mit Phenoxyacylhalogeniden der Formel

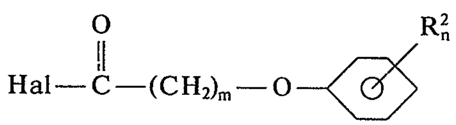

(III)

in welcher

$R^2$, m und n die oben angegebene Bedeutung haben und
Hal für Chlor oder Brom steht,

in Gegenwart eines Verdünnungsmittels umsetzt.

3. Mittel zur Regulierung des Pflanzenwachstums, gekennzeichnet durch einen Gehalt an mindestens einem Phenoxyacylurethan der Formel (I).

4. Verwendung von Phenoxyacylurethanen der Formel (I) zur Regulierung des Pflanzenwachstums.

5. Verfahren zur Herstellung von pflanzenwachstumsregulierenden Mittels, dadurch gekennzeichnet, daß man Phenoxyacylurethane der Formel (I) mit Streckmitteln und/oder oberflächenaktiven Mitteln vermischt.

## Claims

1. Phenoxyacylurethanes of the formula

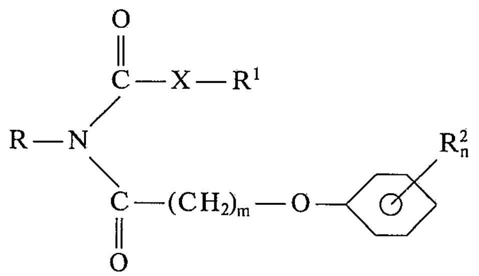

(I)

in which

R represents alkyl with 1 to 6 carbon atoms, halogenalkyl with 1 to 6 carbon atoms and 1 to 5 halogen atoms, cycloalkyl with 5 to 7 carbon atoms or phenyl which is optionally substituted by halogen, halogenoalkyl with 1 to 3 carbon atoms and 1 to 5 halogen atoms, nitro and/or alkyl with 1 to 4 carbon atoms,
$R^1$ represents alkyl with 1 to 6 carbon atoms, cycloalkyl with 5 to 7 carbon atoms or phenyl,
$R^2$ represents alkyl with 1 to 3 carbon atoms, fluorine, chlorine or bromine,
X represents oxygen or sulphur,
m represents 1 or 2 and
n represents integers from 1 to 3.

2. Process for the preparation of phenoxyacylurethanes of the formula (I), characterised in that iminocarbonic acid derivatives of the formula

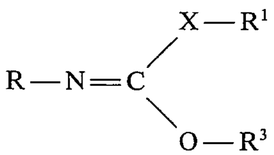

(II)

in which

R, $R^1$ and X have the meaning indicated above, and
$R^3$ represents alkyl with 1 to 4 carbon atoms,

are reacted with phenoxyacyl halides of the formula

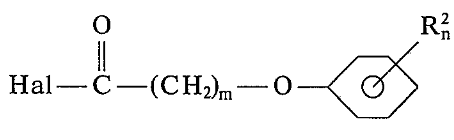

(III)

in which

$R^2$, m and n have the meaning indicated above and
Hal represents chlorine or bromine,

in the presence of a diluent.

3. Agents for regulating plant growth, characterised in that they contain at least one phenoxyacylurethane of the formula (I).

4. Use of phenoxyacylurethanes of the formula (I) for regulating plant growth.

5. Process for the preparation of plant growth regulating agents, characterised in that penoxyacylurethanes of the formula (I) are mixed with extenders and/or surface-active agents.

**Revendications**

1. Phénoxyacyluréthannes de formule:

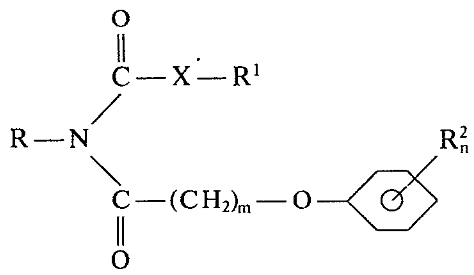

(I)

dans laquelle:

R est un groupe alkyle ayant 1 à 6 atomes de carbone, halogénalkyle ayant 1 à 6 atomes de carbone et 1 à 5 atomes d'halogènes, cycloalkyle ayant 5 à 7 atomes de carbone ou phényle éventuellement substitué par un halogène, un radical halogénalkyle ayant 1 à 3 atomes de carbone et 1 à 5 atomes d'halogènes, un radical nitro et/ou un radical alkyle ayant 1 à 4 atomes de carbone,
$R^1$ est un groupe alkyle ayant 1 à 6 atomes de carbone, cycloalkyle ayant 5 à 7 atomes de carbone ou le radical phényle,
$R^2$ est un groupe alkyle ayant 1 à 3 atomes de carbone, le fluor, le chlore ou le brome,
X est l'oxygène ou le soufre,
m est égal à 1 ou 2, et
n représente les nombres entiers de 1 à 3.

2. Procédé de production de phénoxyacyluréthannes de formule (I), caractérisé en ce qu'on fait réagir des dérivés d'acide imino-carbonique de formule:

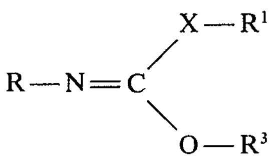

(II)

dans laquelle

R, $R^1$ et X ont la définition indiquée ci-dessus,
$R^3$ est un groupe alkyle ayant 1 à 4 atomes de carbone,

avec des halogénures de phénoxyacyle de formule:

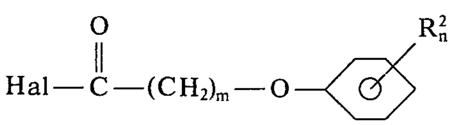

(III)

dans laquelle:

$R^2$, m et n la définition indiquée ci-dessus, et
Hal est le chlore ou le brome,

en présence d'un diluant.

3. Composition pour la régulation de la croissance des végétaux, caractérisée par une teneur en au moins un phénoxyacyluréthanne de formule (I).

4. Utilisation de phénoxyacyluréthannes de formule (I) pour la régulation de la croissance de végétaux.

5. Procédé de production de compositions de régulation de la croissance des végétaux, caractérisé en ce qu'on mélange des phénoxyacyluréthannes de formule (I) avec des diluants et/ou des agents tensio-actifs.